# EUROPÄISCHE PATENTANMELDUNG

(11) **EP 3 114 932 A1**
(43) Veröffentlichungstag der Anmeldung: **11.01.2017**
(21) Anmeldenummer: 16171959.6
(22) Anmeldetag: 30.05.2016
(51) Int. Cl.: A01N 1/02

(54) **VERFAHREN UND VORRICHTUNG ZUM VITALITÄTSERHALT ODER DER VERBESSERUNG DER QUALITÄT VON VITALEN BIOLOGISCHEN MATERIALIEN MIT HILFE ELEKTROMAGNETISCHER FELDER**

(30) Priorität: 06.07.2015 DE 102015110860
(71) Anmelder: Bohn, Wolfgang, 9461 Ruggell (LI); Schmidt, Karlheinz, 72810 Gomaringen (DE)
(72) Erfinder: Bohn, Wolfgang, 9461 Ruggell (LI); Schmidt, Karlheinz, 72810 Gomaringen (DE)
(74) Vertreter: Kohler Schmid Möbus Patentanwälte

(57) **Zusammenfassung**

Ein Verfahren zum Vitalitätserhalt und zur Verbesserung der Qualität von vitalen biologischen Materialien, die über einen längeren Zeitraum in einem vorgegebenen Temperaturbereich zwischen +2°C und +4°C konserviert werden sollen, ist dadurch gekennzeichnet, dass während des Konservierungszeitraums periodisch energetisch schwache, niederfrequente, gepulste elektromagnetische Felder auf die vitalen biologischen Materialien eingestrahlt werden, und dass die magnetische Flussdichte dieser gepulsten elektromagnetischen Feldern ≤ 0,5mTesla, ihre Grundfrequenz ≤ 0,5kHz und die Anzahl von ansteigenden und absteigenden Signalabschnitten innerhalb eines eingestrahlten Pulses ≥ 2 ist. Eine zugehörige Vorrichtung umfasst eine Temperiereinrichtung (1), eine Aufzeichnungseinheit (2) für den Temperaturverlauf sowie eine Einrichtung (3) zur periodischen Einstrahlung von elektromagnetischen Feldern auf die biologischen Materialien. Damit wird der in der ersten Zeit der Lagerung auftretende Qualitätsverlust nachhaltig verringert. So können die bekannten Schwierigkeiten bei der Lagerung, Konservierung bzw. Kultivierung vitaler biologischer Materialien verhindert, zumindest aber erheblich vermindert werden, um die Qualität der vitalen biologischen Materialien zu erhalten, wenn möglich sogar zu verbessern.

## Beschreibung

Die Erfindung betrifft ein Verfahren sowie eine Vorrichtung zum Vitalitätserhalt und/oder zur Verbesserung der Qualität von vitalen biologischen Materialien, insbesondere Blut, Blutzubereitungen und Blutkonserven sowie Gewebe und Organe, die über einen längeren Zeitraum, vorzugsweise zwischen 6 Stunden und 6 Wochen, konserviert werden sollen, wobei die vitalen biologischen Materialien über diesen Konservierungszeitraum in einem vorgegebenen Temperaturbereich zwischen +2°C und +4°C gehalten werden.

### Hintergrund der Erfindung

Ein derartiges Verfahren und die zugehörigen Vorrichtungen zu dessen Durchführung sind beispielsweise in der deutschen Norm DIN 58371 für Blutkonserven-Kühlgeräte vom September 2010 beschrieben.

Insbesondere Kühlschränke für Blutkonserven ***müssen*** -jedenfalls in Deutschland- nach den Vorschriften der DIN 58371 gebaut sein. Diese Norm verlangt u.a.:
1. Betriebstemperatur +4° C bis +/- 2°C
2. Umgebungstemperatur im Aufstellraum von +10° C bis +35° C
3. Überprüfung und Aufzeichnung des Temperaturverlaufs mit Minima und Maxima (z.B. bei Türöffnung, Netzausfall, Beladung, Abtauvorgang)
4. Leicht zu reinigender und desinfizierender Innenraum
5. Abschließbare Kühlschranktür
6. Die Abstellfiächen müssen einer gleichmäßig verteilten Belastung von 100kg/m² standhalten.
7. Stromausfallalarm für mindestens 12 Stunden
8. Optisches und akustisches Warnsignal bei Temperaturabweichung (obere Warngrenze +4° C, untere Warngrenze +2° C)
9. Potentialfreier Kontakt zur Alarmweiterleitung
10. Sicherheitseinrichtung, die ein Abkühlen der Blutkonserven unter +2° C verhindert.

### Stand der Technik und seine Probleme

Systeme zum Qualitätserhalt und/oder zur Qualitätsverbesserung von vitalen biologischen Materialien, wie Organellen, Zellen, Gewebe, Organe, Organismen etc., sind im Stand der Technik in vielfältigen Formen und Ausführungen bekannt. Sie sind dadurch gekennzeichnet, dass sie durch Bereitstellung von geeigneten physikalischen und/oder chemischen Bedingungen die Strukturen und Funktionen der vitalen biologischen Materialien konservieren und/oder optimieren.

Besonders bekannt sind im Stand der Technik Systeme, die durch Kühlung oder Erwärmung eine Anpassung der Umgebungstemperatur an die Anforderungen unterschiedlicher vitaler biologischer Materialien erlauben. Ebenso kann mit den im Stand der Technik bekannten Systemen der Einfluss von Licht gesteuert werden. Kühlschränke oder Brutschränke sind bevorzugte Ausführungen, wobei im Stand der Technik oftmals zusätzlich die chemischen Umgebungsbedingungen an die Anforderungen der jeweiligen biologischen Materialien angepasst werden. Ausführlich beschrieben sind dabei beispielweise die Begasung mit Kohlendioxid und/ oder Sauerstoff, die Regulation des pH und der Redox Verhältnisse, die Versorgung mit Nährstoffen oder die Hemmung der Gerinnung.

Besonders häufig verwendet werden diese im Stand der Technik bekannten Systeme beispielsweise zur Konservierung von vitalen Lebensmitteln, zur Konservierung von Blut und Blutprodukten wie z.B. Erythrozyten-Konzentraten, zur Lagerung oder zum Transport von frisch entnommenen Organen oder Transplantaten.

Trotz der Verwendung dieser im Stand der Technik bekannten Systeme zur Konservierung bzw. Optimierung vitaler biologischer Materialien ist allerdings die Qualität der gelagerten Organellen, Zellen, Gewebe, Organe, Organismen leider bereits nach kürzester Zeit vielfach unzureichend.

Ein bekanntes Beispiel für diese Tatsache sind Blutkonserven bzw. Erythrozyten-Konzentrate, die trotz kühler und dunkler Lagerung sowie chemischer Stabilisierung bereits innerhalb der ersten 24 bis 48 Stunden erheblich an Qualität verlieren.

Bekannt sind insbesondere morphologische Veränderungen mit Bildung von Stachelzellen und kleinen Membran-Vesikeln. Daneben kommt es im Verlauf der Lagerung zum Abbau von Glukose mit Bildung von Milchsäure, d.h. einem Abfall des pH Wertes. Zudem kommt es zu Elektrolyt-Verschiebungen und zu einem Verlust an NO. Ebenso nehmen wichtige Energieträger wie Adenosintriphosphat und allosterische Effektoren wie 2,3-Diphosphoglycerat ab mit schwerwiegenden funktionellen Konsequenzen für die Bindung und Abgabe von Sauerstoff an Hämoglobin oder der Abgabe an das Gewebe. Ein weiterer wichtiger Punkt ist das unterschiedliche Alter der Erythrozyten in Blutkonserven. Die Lebensdauer eines Erythrozyten beträgt durchschnittlich 120 Tage. Normalerweise ist ihr Turnover 2,4 Millionen Zellen pro Sekunde. Bei einer erlaubten Lagerung von 42 Tagen unter den vorgeschriebenen Bedingungen haben also mehr als 1/3 der gesamten eingelagerten roten Blutzellen ihre Lebensdauer erreicht oder überschritten. Sie müssen also sofort nach Transfusion vom Organismus eliminiert werden, da sie u.a. ihre Verformbarkeit verloren haben und somit die Kapillarbereiche, insbesondere auch der Milz, nicht mehr passieren können und daher dort nicht abgebaut werden können.

Sie müssen aufwendig über das reticuloendotheliale System (RES) eliminiert werden und sind somit in keiner Weise mehr nützlich, sondern als zusätzliche Belastung einzustufen. Außerdem muss dringend angenommen werden, dass gelagerte Erythrozyten schneller altern und daher der Anteil von alten, unnützen Zellen höher ist als prozentual errechnet.

Wei-Wei T. et al (2014) fanden in einer Untersuchung von länger als 14 Tage gelagerten Blutkonserven bereits mehr geschädigte als gesunde Erythrozyten. Gleichzeitig wurde ein hoher Anteil von schädigenden Membranfragmenten, Mikropartikeln und freiem Hämoglobin, die von bereits hämolysierten Zellen stammten, festgestellt. Bei Lagerung von über 21 Tagen hatte die Gesamtzahl der Erythrozyten um fast 1/4 abgenommen Die Untersucher kamen zu dem Schluss, dass die Transfusionen dieser Blutkonserven den Patienten nicht helfen, sondern im Gegenteil eine Reihe von klinischen Problemen hervorrufen können. Ganz analog ist die Situation bei Zellen, Geweben oder Organen, die für die Transplantation entnommen wurden, auch wenn diese unter Kühlung, Dunkelheit und chemischer Protektion aufbewahrt werden.

### Aufgabe der Erfindung

Aufgabe der vorliegenden Erfindung ist es demgegenüber, ein gattungsgemäßes Verfahren der eingangs beschriebenen Art - sowie eine zu dessen Durchführung erforderliche Vorrichtung- mit möglichst einfachen und allgemein zur Verfügung stehenden technischen Mitteln sowie wirtschaftlich preisgünstig dahin gehend zu verbessern, dass diese im Stand der Technik bekannten Schwierigkeiten bei der Lagerung, Konservierung bzw. Kultivierung vitaler biologischer Materialien verhindert, zumindest aber erheblich vermindert werden, um die Qualität der vitalen biologischen Materialien zu erhalten, wenn möglich sogar zu verbessern.

Die eigentliche Aufgabe der vorliegenden Erfindung besteht also *nicht in erster Linie* darin, die zulässige Lagerzeit für die vitalen biologischen Materialien zu verlängern, sondern vor allem den in der ersten Zeit der Lagerung auftretenden Qualitätsverlust nachhaltig zu verringern.

### Kurze Beschreibung der Erfindung

Erfindungsgemäß wird diese - anspruchsvolle- Aufgabe auf ebenso überraschend einfache wie wirkungsvolle Art und Weise dadurch gelöst, dass während des Konservierungszeitraums periodisch energetisch schwache, niederfrequente, gepulste elektromagnetische Felder auf die vitalen biologischen Materialien eingestrahlt werden, und dass die magnetische Flussdichte dieser gepulsten elektromagnetischen Felder ≤ 0,5mTesla, ihre Grundfrequenz ≤ 0,5kHz und die Anzahl von ansteigenden und absteigenden Signalabschnitten innerhalb eines eingestrahlten Pulses ≥ 2 ist. *Zusäfzlich* zu den im Stand der Technik bekannten physikalischen und chemischen Einflussgrößen kommen also gemäß der vorliegenden Erfindung in zeitlicher Periodik energetisch schwache, niederfrequente, gepulste elektromagnetische Felder zur Anwendung.

### Allgemeine Wirkungsweise der Erfindung und weitere Unterschiede gegenüber dem Stand der Technik

Die vorliegende Erfindung betrifft generell Systeme aus Einheiten zur Produktion energetisch schwacher, niederfrequenter, gepulster elektromagnetischer Felder in Kombination mit Einheiten zur Regulation von Temperatur und/oder Lichteinwirkung sowie gegebenenfalls Einheiten zur Veränderung der chemischen Milieubedingungen wie z.B. Begasung. Derartige Systeme sind vor allem geeignet zur Beeinflussung / Stabilisierung von Struktur und Funktion lebender Zellen, Gewebe, Organe, Organismen zur Konservierung. Die Systeme eignen sich vor allem zur energetischen Stabilisierung mikrobieller, pflanzlicher, tierischer und menschlicher Zellen Gewebe oder Organe zur Verbesserung der biologischen Qualität beispielsweise für nutritive, kosmetische, diagnostische oder therapeutische Anwendungen.

Aus der EP 0 995 463 A1 sind zwar eine Vorrichtung sowie ein elektrisches oder elektromagnetisches Signal zur Beeinflussung biologischer Abläufe per se bekannt. Dabei werden auch niederfrequente, gepulste elektromagnetische Felder auf vitale biologische Materialien eingestrahlt. Allerdings offenbart die EP 0 995 463 A1 nicht einmal andeutungsweise die -oben ausführlich dargelegten- technischen und biologischen Probleme bei einer Konservierung insbesondere von Blut, Blutzubereitungen und Blutkonserven sowie Geweben und Organen, die über einen längeren Zeitraum, nämlich zwischen 6 Stunden und 6 Wochen, in einem vorgegebenen Temperaturbereich zwischen +2°C und +4°C aufbewahrt werden sollen. Vielmehr beschäftigt sich die EP 0 995 463 A1 mit semiinvasiven Verfahren zur Behandlung von Körperteilen, insbesondere bei Knochenbrüchen, der Anregung von Stoffwechselvorgängen in Gewebe, physiologischen Austauschprozessen über intrakorporale Membransysteme, Mechanismen zur Verstärkung von Bindegewebs- und Knorpelbildung, enchondraler Ossifikation, formerhaltender und regenerationsfördender Wirkungen sowie einer zusätzlichen Vaskularisation. Des Weiteren beschreibt die EP 0 995 463 A1 auch die Mineralisation von Bindegewebe. Einen Hinweis auf konservierende Anwendungen, insbesondere bei einer Langzeitaufbewahrung von Blut, Gewebe oder etwa Spender-Organen gibt die EP 0 995 463 A1 jedoch nicht.

### Bevorzugte Ausführungsformen der Erfindung

Ganz besonders bevorzugt sind Ausführungsformen des erfindungsgemäßen Verfahrens, die sich dadurch auszeichnen, dass die magnetische Flussdichte der niederfrequenten gepulsten elektromagnetischen Felder zwischen 1µTesla und 100µTesla, insbesondere zwischen 3,5µTesla und 35µTesla, vorzugsweise etwa 10µTesla bis 21µTesla beträgt. Voruntersuchungen an vitalen biologischen Materialien haben gezeigt, dass mit diesen Feldstärken die besten Ergebnisse hinsichtlich der gewünschten Wirkungen zu erzielen waren.

In der Praxis bewähren sich besonders Ausführungsformen des erfindungsgemäßen Verfahrens, bei welchen die Grundfrequenz der gepulsten elektromagnetischen Felder zwischen 7Hz und 70Hz, insbesondere zwischen 10Hz und 50Hz, vorzugsweise etwa 32Hz beträgt. Bereits aus den Arbeiten von W.Ross Adey sind seit 1986 sogenannte "biologische Fenster" hinsichtlich der wirksamen Frequenz von elektromagnetischen Feldern auf vitale biologische Materialien wissenschaftlich nachgewiesen und anerkannt.

Weiter ist es von Vorteil, wenn die Anzahl von ansteigenden und absteigenden Signalabschnitten innerhalb eines eingestrahlten Pulses < 100, vorzugsweise etwa 40 beträgt.

Eine erste Klasse von besonders bevorzugten Ausführungsformen der Erfindung zeichnet sich dadurch aus, dass die Form der eingestrahlten niederfrequenten gepulsten elektromagnetischen Felder so gewählt wird, dass die zu konservierenden vitalen biologischen Materialien mit einem nulllinienasymmetrischen pulsierenden elektromagnetischen Gleichfeld bestrahlt werden.

Sowohl die angegebene Anzahl der ansteigenden und aufsteigenden Signalabschnitte als auch der Umstand, dass es ein nulllinienasymmetrisches pulsierendes elektromagnetisches Gleichfeld zur Anwendung kommt haben in Voruntersuchungen die besten Ergebnisse hinsichtlich der gewünschten Wirkungen auf vitale biologische Materialien erzielen lassen.

Eine zweite Klasse von ergänzenden oder aber dazu alternativen Ausführungsformen zeichnet sich dadurch aus, dass die Einstrahlung von niederfrequenten gepulsten elektromagnetischen Feldern auf die zu konservierenden vitalen biologischen Materialien maximal viermal pro 24h und nicht länger als 20min pro Einzelanwendung erfolgt. Voruntersuchungen haben gezeigt, dass bei häufigeren oder längerdauernden Einwirkungen der niederfrequenten gepulsten elektromagnetischen Felder ein Gewöhnungseffekt einsetzt, der sich hinsichtlich der gewünschten Wirkungen sogar gegenteilig auswirkt.

Bei einer dritten Klasse von Ausführungsform des erfindungsgemäßen Verfahrens umfassen die niederfrequenten gepulsten elektromagnetischen Felder Impulsfolgen aus Einzelimpulsen, deren Amplitude einer Exponential-Funktion entspricht. Bei Voruntersuchungen an vitalen biologischen Materialien hat sich gezeigt, dass diese Form der Einzelimpulse die besten Ergebnisse hinsichtlich der gewünschten Wirkungen erzielen lassen.

Eine weitere Klasse von Ausführungsform des erfindungsgemäßen Verfahrens ist dadurch gekennzeichnet, dass die biologischen Materialien natürliche und/oder gentechnisch veränderte pflanzliche, tierische und/oder mikrobielle Organellen, Zellen und/oder Organismen umfassen.

Ganz besonders bevorzugt sind auch Ausführungsformen der Erfindung, die sich dadurch auszeichnen, dass während des Konservierungszeitraums zusätzlich zur Temperierung und zur Einstrahlung energetisch schwacher, niederfrequenter, gepulster elektromagnetischer Felder weitere biologisch wirksame physikalische und/oder chemische Einflüsse auf die vitalen biologischen Materialien ausgeübt werden, insbesondere die Einstrahlung von Licht und/oder die Veränderung der chemischen Milieubedingungen, etwa eine Begasung mit Kohlendioxid oder Sauerstoff oder eine Regulation des pH-Werts und/oder der Redox-Verhältnisse, die Versorgung mit Nährstoffen oder die Hemmung der Gerinnung. Mit diesen Ausführungsformen werden wechselseitige Synergien der unterschiedlichen physikalischen Verfahren ermöglicht.

In den Rahmen der vorliegenden Erfindung fällt auch eine Vorrichtung zur Durchführung des erfindungsgemäßen Verfahrens, die sich dadurch auszeichnet, dass eine Temperiereinrichtung vorhanden ist, mittels derer die zu konservierenden vitalen biologischen Materialien über den Konservierungszeitraum in einem vorgegebenen Temperaturbereich gehalten werden können, dass eine Aufzeichnungseinheit für den Temperaturverlauf innerhalb der Vorrichtung über den gesamten Konservierungszeitraum vorhanden ist, und dass eine Einrichtung zur periodischen Einstrahlung von energetisch schwachen, nieder-frequenten, gepulsten elektromagnetischen Feldern auf die vitalen biologischen Materialien vorhanden ist, die einen Generator zur Erzeugung von niederfrequenten gepulsten elektromagnetischen Feldern umfasst, deren magnetische Flussdichte ≤ 0,5mTesla, deren Frequenz ≤ 0,5kHz und bei denen die Anzahl von ansteigenden und absteigenden Signalabschnitten innerhalb eines eingestrahlten Pulses ≥ 2 ist.

Voruntersuchungen an vitalen biologischen Materialien haben gezeigt, dass mit diesen Feldstärken, Frequenzen und Signalanstiegen und -abstiegen die besten Ergebnisse hinsichtlich der gewünschten Wirkungen zu erzielen waren. Der stimulatorische Effekt der biophysikalischen Signalwirkung des Wechsels der magnetischen Suszeptibilität bestimmter entscheidender Eiweiße in den vitalen biologischen Materialien wird durch diese Vorrichtung erreicht.

Bei bevorzugten Weiterbildungen dieser erfindungsgemäßen Vorrichtung, die insbesondere zur Durchführung der oben zuletzt aufgeführten Verfahrensvariante dienen, ist eine Lichtquelle zur Einstrahlung von Licht in die zu konservierenden vitalen biologischen Materialien und/oder eine Einrichtung zur Veränderung der chemischen Milieubedingungen, insbesondere eine Einrichtung zur Begasung mit Kohlendioxid oder Sauerstoff und/oder eine Einrichtung zur Regulation des pH-Werts und/oder der Redox-Verhältnisse und/oder eine Einrichtung zur Versorgung mit Nährstoffen und/oder eine Einrichtung zur Hemmung der Gerinnung und/oder eine Einrichtung zur mechanischen Bewegung der zu konservierenden vitalen biologischen Materialien vorhanden. Damit werden wechselseitige Synergien der unterschiedlichen physikalischen Verfahren ermöglicht.

Eine -ergänzende oder alternative- Weiterbildung zeichnet sich dadurch aus, dass eine Einrichtung zur Sterilisierung bzw. Reduzierung der Keimbelastung vorgesehen ist. Durch diese Weiterbildung können Störungseinflüsse durch Kontaminierung von vitalen biologischen Materialien reduziert werden.

Bei einer ganz besonders bevorzugt Klasse von Ausführungsformen der Erfindung ist die Vorrichtung als ein Transport-Behälter ausgestaltet. Qualitätsverlusten der vitalen biologischen Materialien während der zeitlichen Aufbewahrung zum Transport in den genannten Behältnissen wird vorgebeugt.

Von großem Nutzen schließlich ist auch eine Klasse von Ausführungsformen, bei welchen die Vorrichtung als Inkubator ausgestaltet ist mit dessen Hilfe kontrollierte Außenbedingungen für diverse Brut- und/oder Wachstumsbedingungen für Gewebe oder Organe, die zur Entwicklung ein keimarmes, spezifisches Mikroklima mit eng geregelter Temperatur und Luftfeuchtigkeit benötigen, geschaffen und über einen bestimmten Zeitraum gleichförmig beibehalten werden können. Auch mit diesen Ausführungsformen wird Qualitätsverlusten der vitalen biologischen Materialien während der zeitlichen Aufbewahrung in den genannten Behältnissen vorgebeugt.

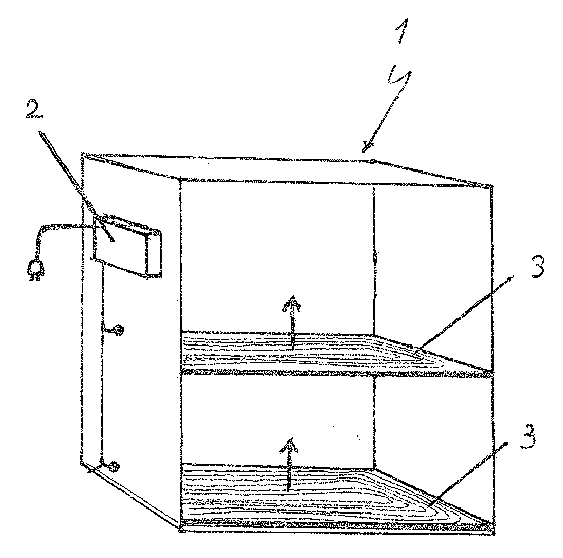

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

In der schematischen Zeichnung ist ein Ausführungsbeispiel der Erfindung dargestellt, welches in der nachfolgenden Detail-Beschreibung näher erläutert wird.

Die -einzige- Figur zeigt eine schematische vertikale Schnitt-Darstellung einer Ausführungsform der Vorrichtung zur Durchführung des erfindungsgemäßen Verfahrens zum Vitalitätserhalt und/oder zur Verbesserung der Qualität von vitalen biologischen Materialien, insbesondere Blut, Blutzubereitungen und Blutkonserven sowie Gewebe und Organe, die über einen längeren Zeitraum, vorzugsweise zwischen 6 Stunden und 6 Wochen, konserviert werden sollen, wobei die vitalen biologischen Materialien über diesen Konservierungszeitraum in einem vorgegebenen Temperaturbereich zwischen +2°C und +4°C gehalten werden. Dieses Verfahren zeichnet sich erfindungsgemäß dadurch aus, dass während des Konservierungs-zeitraums periodisch energetisch schwache, niederfrequente, gepulste elektromagnetische Felder auf die vitalen biologischen Materialien eingestrahlt werden und dass die magnetische Flussdichte dieser gepulsten elektromagnetischen Felder < 0,5mTesla, ihre Grundfrequenz ≤ 0,5kHz und die Anzahl von ansteigenden und absteigenden Signalabschnitten innerhalb eines eingestrahlten Pulses ≥ 2 ist.

Eine zugehörige Vorrichtung zur Durchführung des erfindungsgemäßen Verfahrens ist in der Figur schematisch dargestellt und dadurch gekennzeichnet, dass eine **Temperier-einrichtung 1** vorhanden ist, mittels derer die zu konservierenden vitalen biologischen Materialien über den Konservierungszeitraum in einem vorgegebenen Temperaturbereich gehalten werden können, dass eine **Aufzeichnungseinheit 2** für den Temperaturverlauf innerhalb der Vorrichtung über den gesamten Konservierungszeitraum vorhanden ist, und dass eine **Einrichtung 3** zur periodischen Einstrahlung von energetisch schwachen, niederfrequenten, gepulsten elektro-magnetischen Feldern auf die vitalen biologischen Materialien vorhanden ist, die einen Generator zur Erzeugung von niederfrequenten gepulsten elektromagnetischen Feldern umfasst, deren magnetische Flussdichte ≤ 0,5mTesla, deren Frequenz ≤ 0,5kHz und bei denen die Anzahl von ansteigenden und absteigenden Signalabschnitten innerhalb eines eingestrahlten Pulses ≥ 2 ist.

Im gezeigten Ausführungsbeispiel ist die Temperiereinrichtung 1 als ein Kühlschrank ausgeführt, der die Vorschriften der DIN 58371 erfüllt. Dieser Kühlschrank weist eine Aufzeichnungseinheit 2 auf, die auch eine Stromzuführung, ein Steuergerät für die elektrischen und elektronischen Bauelemente, einen Impulsgenerator, eine Zeitschaltuhr sowie einen Transformator umfasst. Diese Bestandteile der Aufzeichnungseinheit 2 sind in der Regel im Handel erhältliche Standard-Bauteile und in der Zeichnung nicht im Detail dargestellt.

Im Inneren der transparent gezeichneten Temperiereinrichtung 1, sind Einrichtungen 3 zur periodischen Einstrahlung von energetisch schwachen, niederfrequenten, gepulsten elektro-magnetischen Feldern auf vitale biologische Materialien vorhanden, die im gezeigten Beispiel als flache, ovale Feldspulen ausgeführt sind. Die Feldrichtung ist in Form von Pfeilen angedeutet.

Die erfindungsgemäßen Systeme sind für breite Anwendungsgebiete geeignet, da sich die Temperaturen, die chemischen Bedingungen sowie die Charakteristika der gepulsten elektromagnetischen Felder an die Qualitäts-Erfordernisse der vitalen biologischen Materialien in weiten Grenzen anpassen lassen.

Besonders geeignete Systeme umfassen in Kühlschränke oder sonstige Transport- oder Aufbewahrungsbehältnisse eingebaute Spulen mit entsprechenden Impulsgebern, die ein energetisch schwaches, niederfrequentes, gepulstes elektromagnetisches Feld mit magnetischen Flussdichten < 150 µTesla, Puls-Frequenzen < 250 Hz und einer Anzahl von Einzelsignalen innerhalb eines Pulsen < 100 generieren.

Im Falle von Blut bzw. Erythrozyten ist bereits 1936 von Pauling gezeigt worden, dass oxygeniertes und desoxygeniertes Hämoglobin völlig unterschiedliche magnetische Eigenschaften aufweisen. Im oxygenierten Relaxed (R)-Zustand ist Hämoglobin diamagnetisch, weist eine niedrige magnetische Suszeptibilität und Low-Spin Eisen auf, während im desoxygenierten Tense (T)-Zustand Hämoglobin paramagnetisch ist, eine hohe magnetische Suszeptibilität und HighSpin Eisen aufweist.

Der Grund hierfür liegt nach übereinstimmender wissenschaftlicher Meinung in der Struktur des Hämoglobins, also des Sauerstoff transportierenden Proteins im Blut. Jedes Hämoglobin-Protein enthält 4 eisenhaltige Moleküle, die sogenannten Häm-Gruppen. Ein Häm-Molekül besteht im Wesentlichen aus einem ringförmigen Porphyrin Molekül, weiches aus 4 Pyrrol Ringen zusammengesetzt ist und in seiner Mitte ein einzelnes Eisenatom enthält. Aus seiner mittigen Position heraus hat dieses Eisenatom 6 Bindungsstellen (Ligandenbindungen) von denen 4 durch die Bindungen zu den Stickstoffatomen der 4 Pyrrol Ringe besetzt sind. Die fünfte Bindungsstelle ist mit einer Aminosäure (Histidin) belegt und die sechste Bindungsstelle ist eine freie Bindungsstelle (z.B. für zu transportierenden Sauerstoff oder Kohlendioxid).

Schon geringste Erhöhung der Temperatur oder Verminderung des pH-Wertes führen zu Spannungen im Hämoglobin-Molekül (sogenannter tense- oder T-Zustand). Durch diese Molekülspannung kann die Bindung des Sauerstoff-Atoms nicht mehr aufrecht gehalten werden. Dieser Mechanismus erklärt den Sauerstofftransport durch das Hämoglobin von der Bindung in den relativ "kalten" Lungen und die Abgabe des Sauerstoffs genau an den Stellen, wo zum Beispiel durch die Muskelarbeit Wärme und Laktat entsteht, was zu den genannten Bedingungen für die Molekülspannung des Hämoglobins und somit die Abgabe des Sauerstoffs in eben diesen Bereichen führt, wo er auch benötigt wird.

Unter physiologischen Bedingungen mit ständigem Wechsel zwischen Aufnahme und Abgabe von Sauerstoff unterliegt also Hämoglobin einer hohen Dynamik mit permanentem und raschem Wechsel der magnetischen Eigenschaften.

Sind alle 6 Ligandenbindungen des Häm-Moleküls besetzt (gesättigt), ist also Sauerstoff zum Transport gebunden, besitzt das zentrale Eisenatom kein magnetisches Moment, es ist also diamagnetisch. Durch die Lösung der sechsten Ligandenbindung und Abgabe des Sauerstoffs entsteht sofort ein freier Elektronenspin (± 1/2) am zentralen Eisenatom und damit wird das Molekül paramagnetisch. Die **magnetische Suszeptibilität** von Blut ist nach der Abgabe von Sauerstoff erhöht.

Die biophysikalische Signalwirkung des Wechsels der magnetischen Suszeptibilität wird durch die folgenden physikalischen Grundlagen erklärt:
Jedes freie Elektron besitzt einen sogenannten "Elektronenspin", also einen Drehimpuls durch die Rotation um die eigene Achse. Aus diesem Drehimpuls resultiert, dass freie Elektronen ein magnetisches Moment besitzen. Dieses ist proportional zum Drehimpuls. Legt man ein äußeres Elektromagnetfeld an ein Molekül mit einem freien Elektron an, ergibt sich eine Wechselwirkung zwischen der Energie des Elektrons und dem äußeren Magnetfeld. Dies bedeutet, dass durch die Ungleichheit des lokalen magnetischen Moments und dem äußeren Feld nun ein zusätzlicher Bahndrehimpuls, also ein weiterer Strom mit einem weiteren magnetischen Feld entsteht, der Induktion auf umliegende Moleküle ausübt. Nach der sogenannten Lenz' schen Regel sind diese Ströme allerdings so gerichtet, dass sie der erzeugenden Ursache, also dem äußeren Elektromagnetfeld entgegengerichtet sind. Die Induktion führt also in Richtung Diamagnetismus bzw. zu einer leicht negativen magnetischen Suszeptibilität.

Aus den bisher dargestellten Zusammenhängen muss man folgerichtig konstatieren, dass die Wirkung eines äußeren elektromagnetischen Feldes auf Zellen, Gewebe oder einen Organismus auf der Beeinflussung quantenmechanischer Prozesse beruht. Zellen, Gewebe und der daraus bestehende Organismus benötigen zur optimalen Leistung bestimmte Stimuli. So scheint auch die Einwirkung bestimmter niederfrequenter elektromagnetischer Felder niedriger Energie ein solch vitaler Stimulus zu sein, da ein vollständiges Fehlen dieser Felder im Organismus zu funktionellen, vor allem vegetativen Störungen führt. Dieser Tatsache ist besonders aus den Anfängen der Weltraumfahrt (Raumkapseln wirken wie ein Faraday'scher Käfig und schirmen elektromagnetische Felder ab), aber auch aus zahlreichen Tierversuchen seit längerem bekannt. Erklärung dafür ist wohl die Tatsache, dass die Evolution unter ständigem Einfluss solcher Felder stattfand und täglich stattfindet und daher die Anwesenheit solcher Felder als wirksamer Bestandteil und somit als Stimulus einiger funktioneller Vorgänge von der Natur genutzt worden ist.

Bei den im Stand der Technik bekannten Systemen führt die Lagerung der Blutkonserven zu einem unphysiologischen Zustand des Hämoglobins, indem die permanenten und raschen Wechsel der magnetischen Eigenschaften und somit der physiologische Stimulus fehlen.

Bei der Lagerung in den erfindungsgemäßen Systemen hat sich nun anhand verschiedener Qualitätsmarker überraschend gezeigt, dass durch die Einwirkung der externen gepulsten Magnetfelder eine Annäherung an die physiologischen Bedingungen mit deutlicher Qualitätsverbesserung der gelagerten vitalen biologischen Materialien erreicht werden kann.

Bei Untersuchungen konnte nachgewiesen werden, dass die Wirksamkeit der erfindungsgemäßen energetisch schwachen, niederfrequenten, gepulsten elektromagnetischen Felder auf die vitalen biologischen Systeme stark von der im generierten Signal definierten Dynamik abhängt. Einer hohen Anzahl von Anstiegen und Abnahmen der Feldstärke innerhalb der Impulsform kommt eine wesentlich höhere Bedeutung zu als der Flussdichte des elektromagnetischen Feldes. So ist zu erklären, dass mit niedrigen Intensitäten günstigere biologische Wirkungen erzielt werden können während hohe Flussdichten die Effektivität sinken lassen. Es werden also für die vorliegende Erfindung nur Signale verwendet, die eine hohe Anzahl von Anstiegen und Abnahmen der Feldstärke innerhalb der Impulsform haben und durch die in erster Näherung ein typisches nulllinienasymmetrisches pulsierendes elektromagnetisches Gleichfeld erzeugt wird. Die Wiederholungsraten der Einzelsignale können innerhalb eines Gesamtimpulses, der ein Bündel von Einzelsignalen darstellt, variieren. Die vom Impulsgenerator ausgehenden Impulse sollen periodische Impulse darstellen, die an- und absteigende Hüllkurven aufweisen mit harmonischem oder unharmonischem Schwingungsverlauf innerhalb der Hüllkurven und die Impulsfolge soll im Bereich von 1 Impuls pro 20 min bis zu 10 Impulse pro 1 Minute liegen. Es können auch Impulse mit exponentiell an- und absteigenden Hüllkurven zur Anwendung kommen.

Die Spulen zur Generierung des elektromagnetischen Feldes werden zentral oder seitlich in der den Behältnissen zur Aufbewahrung des biologischen Materials platziert, wobei zu beachten ist, dass eventuelle Einlegeböden aus Materialien (z.B. Kunststoffe) bestehen, die keine Abschirmung oder Abschwächung des elektromagnetischen Feldes verursachen.

Da ein magnetisches Feld per se etwa mit dem Quadrat der Entfernung von der Spule abnimmt, dürfen die eingebauten Spulen einen Abstand von ca. 20 - 30 Zentimeter zu den oberen und unteren Abschlüssen der Behältnisse nicht überschreiten. Wenn notwendig müssen weitere Spulen dazwischen platziert werden.

Dabei ist die Polung dieser Spulen zu beachten, um keine unnötigen Verwirbelungen oder Auslöschprozesse entstehen zu lassen.

Das impulsgebende Steuergerät und seine Bedienelemente sind außerhalb oder innerhalb des Behältnisses anzubringen, je nach räumlichen Gegebenheiten. Die Periodik und die Dauer der Einzelapplikationen eines gepulsten elektromagnetischen Feldes richten sich nach der Art des biologischen Materials, des Behältnisses, des verwendeten Impulsgenerators bzw. des generierten elektromagnetischen Feldes und dem Zweck der Einlagerung, sollten aber die Anzahl von 4 Wiederholungen pro 24 Stunden und die Dauer der Einzelanwendung von 20 Minuten nicht überschreiten.

### Anwendungsbeispiel: Einlagerung von Blut oder Blutprodukten z.B. Erythrozyten-Konzentraten

Unter den Bedingungen eines akuten, massiven Blutverlustes, z.B. durch Trauma oder Operation, kommt es zu einer verminderten Sauerstoff Versorgung des Organismus, was je nach Ausmaß besonders bei stoffwechselaktiven Geweben (z.B. Gehirn) innerhalb kurzer Zeit zu Funktionsstörungen und zu irreversiblen Schäden führen kann. Autotransfusionen bzw. Fremdtransfusionen von Blut oder Blutprodukten wie z.B. Erythrozyten-Konzentraten sind geeignet, diese Risiken zu vermindern, da sie durch das in den Erythrozyten enthaltene Hämoglobin die Transportkapazität für Sauerstoff erhöhen.

Im Stand der Technik werden zu diesem Zweck Erythrozyten- Konzentrate von Blutspendern oder Vollblutkonserven unter kontrollierten Bedingungen (Transfusionsgesetz, Hämotherapie-Richtlinie) bis zu 42 Tage eingelagert. Bereits nach wenigen Tagen kommt es zu einem deutlichen Qualitätsverlust, was sich anhand verschiedener Qualitätskriterien zeigt.

Bei Einlagerung in den erfindungsgemäßen Systemen mit gleichzeitiger Anwendung der gepulsten Magnetfelder zeigt sich eine deutlich verbesserte Qualität, indem beispielsweise die Gehalte an ATP im Mittel um 18 % und die Gehalte an 2,3-DPG im Mittel um 10 % höher liegen. Die Bestimmungsmethoden folgen den Empfehlungen des International Committee for Standardization in Hematology (ICSH).

Durch die zusätzlich einwirkenden gepulsten elektromagnetischen Felder kommt es ganz offenbar zu einer energetischen Stabilisierung mit Änderung der Kinetik der Bindung und Abgabe von Sauerstoff und der Konsequenz einer Erhöhung des Sauerstoffangebots im Gewebe. Unter den bisher üblichen Aufbewahrungskonditionen wird die Veränderung der Bindungseigenschaften, besonders die Abnahme der Sauerstoff- Abgabe des Hämoglobins innerhalb der ersten 24 - 48 Stunden der Lagerung, als erheblicher Qualitätsverlust betrachtet.

### Anwendungsbeispiel : Transport von Organtransplantaten

Ein Hauptproblem der Transplantationsmedizin ist die "Organfrische" in Abhängigkeit von der Entfernung zwischen Spender und Empfänger und somit der Transportdauer. Oberstes Ziel ist die ex vivo Zeit der Organe möglichst kurz zu halten. Die Zeitlimits sind eng gesteckt. Ein Herz oder eine Lunge dürfen, in gekühltem Zustand, beispielsweise nur maximal 4-6 Stunden ex vivo sein. Bei Leber und Bauchspeicheldrüse sind es 10-12 Stunden und bei Nieren bis zu 24 Stunden.

Anforderungen an ein optimales Transportsystem sind ein möglichst schnelles Herunterkühlen des Transplantats auf 4 ° C, konstantes Halten dieser Temperatur über einen Zeitraum von bis zu 24 Stunden und Vermeiden zu niedriger Temperaturen. Trotz des Kühlens der Organe finden in den Transplantaten weiterhin Stoffwechselprozesse statt, z.B. zur Aufrechterhaltung von Zellmembranpotenzialen, die auch in der ex vivo Phase die Bereitstellung von Energie in den Zellen erfordert.

In diesem Zusammenhang spielen in dieser Zeit ohne die mikrozirkulatorische Versorgung die Wechselwirkungen induzierter magnetischer Momente mit einem äußeren gepulsten Elektromagnetfeld eine entscheidende Rolle für chemische Prozesse wie Bindungstypen oder Oxidationsstufen durch den Wechsel zwischen diamagnetischen oder paramagnetischen Eigenschaften beteiligter Moleküle. Auf die Organtransplantate in der ex vivo Zeit haben daher die Applikation von gepulsten elektromagnetischen Feldern durch die beschriebenen Systeme einen qualitätssichernden oder qualitätsverbessernden Einfluss auf Organtransplantate.

### Möglichkeiten zur Erstellung der erfindungsgemäßen Systeme

In bestehende Systeme auf dem derzeitigen Stand der Technik, die durch Einwirkung von Temperatur, Licht und chemischem Milieu eine Anpassung der Umgebungsbedingungen an die Anforderungen unterschiedlicher vitaler biologischer Materialien erlauben (z.B. Kühlschränke, Organtransportbehältnisse etc.), werden eine entsprechende Anzahl von Spulen eingebaut und mit einer außerhalb oder innerhalb der Behältnisse angebrachten signalerzeugenden Steuerungseinheit verbunden.

Die Anzahl und Form der Spulen wird bestimmt durch die räumlichen Bedingungen innerhalb der entsprechenden Behältnisse. Es können sowohl Rundspulen als auch ovale, quadratische oder rechteckförmige Spulen verwendet werden. Ausschlaggebend ist eine möglichst vollständige Raumabdeckung durch das gepulste elektromagnetische Feld in gleichbleibender optimaler Feldstärke unter Berücksichtigung der für die Aufbewahrungsbehältnisse verwendeten Materialien und passend zu den Bedingungen der aufbewahrten vitalen biologischen Materialien. Zwischen den Spulen und dem gelagerten biologischen Material dürfen keine magnetfeldbeeinflussenden Materialien verwendet werden, weder in den baulichen Gegebenheiten der Aufbewahrungsbehältnisse noch in der entsprechenden Verpackung oder den Lagerungsgegebenheiten des biologischen Materials. Über die Steuereinheit wird die Einstellung der entsprechend optimalen Feldstärke, die Zeitdauer der Applikation sowie die Anzahl der Wiederholungen der Applikation pro 24 h vorgenommen. Die elektrische Versorgung erfolgt über aufladbare Akkus in der Steuereinheit oder die direkte Verbindung zu einer Stromquelle beispielsweise über einen Transformator.

Das beim erfindungsgemäßen Verfahren verwendete Signal für die periodisch energetisch schwachen, niederfrequenten, gepulsten elektromagnetischen Felder besteht aus einer Folge von halbwellenförmigen, sinusartigen Intensitätsvariationen. Beginnend mit kleinen Werten steigt die Intensität zunächst langsam an, fällt dann wieder ab auf einen Wert, der innerhalb eines Impulses aber höher liegt als der Ausgangswert. Diese Abfolge wiederholt sich, wobei die Intensitätswechsel immer dichter werden und der Versatz gegen die Nulllinie zunehmend wächst. Die An- und Abstiege werden dabei entsprechend steiler. Der Intensitätsablauf wiederholt sich 33,3-mal pro Sekunde. Nach 2 Minuten wird die Richtung des Magnetfeldes geändert.

An einem Steuergerät lässt sich die Dauer der Signalfolgen zwischen 8 und 20 Minuten einstellen, Es handelt sich also beim diesem Magnetfeld in erster Näherung um ein typisches nulllinienasymmetrisches pulsierendes elektromagnetisches Gleichfeld.

## Patentansprüche

1. Verfahren zum Vitalitätserhalt und/oder zur Verbesserung der Qualität von vitalen biologischen Materialien, insbesondere Blut, Blutzubereitungen und Blutkonserven sowie Gewebe und Organe, die über einen längeren Zeitraum, vorzugsweise zwischen 6 Stunden und 6 Wochen, konserviert werden sollen, wobei die vitalen biologischen Materialien über diesen Konservierungszeitraum in einem vorgegebenen Temperaturbereich zwischen +2°C und +4°C gehalten werden,
**dadurch gekennzeichnet,**
**dass** während des Konservierungszeitraums periodisch energetisch schwache, niederfrequente, gepulste elektromagnetische Felder auf die vitalen biologischen Materialien eingestrahlt werden und dass die magnetische Flussdichte dieser gepulsten elektromagnetischen Felder ≤ 0,5mTesla, ihre Grundfrequenz ≤ 0,5kHz und die Anzahl von ansteigenden und absteigenden Signalabschnitten innerhalb eines eingestrahlten Pulses ≥ 2 ist.

2. Verfahren nach Anspruch 1, **dadurch gekennzeichnet, dass** die magnetische Flussdichte der niederfrequenten gepulsten elektromagnetischen Felder zwischen 1µTesla und 100µTesla, insbesondere zwischen 3,5µTesla und 35µTesla, vorzugsweise etwa 10µTesla bis 21µTesla beträgt.

3. Verfahren nach einem der vorhergehenden Ansprüche, **dadurch gekennzeichnet, dass** die Grundfrequenz der gepulsten elektromagnetischen Felder zwischen 7Hz und 70Hz, insbesondere zwischen 10Hz und 50Hz, vorzugsweise etwa 32Hz beträgt.

4. Verfahren nach einem der vorhergehenden Ansprüche, **dadurch gekennzeichnet, dass** die Anzahl von ansteigenden und absteigenden Signalabschnitten innerhalb eines eingestrahlten Pulses < 100, vorzugsweise etwa 40 beträgt.

5. Verfahren nach einem der vorhergehenden Ansprüche, **dadurch gekennzeichnet, dass** die Form der eingestrahlten niederfrequenten gepulsten elektromagnetischen Felder so gewählt wird, dass in den zu konservierenden vitalen biologischen Materialien ein nulllinienasymmetrisches pulsierendes elektromagnetisches Gleichfeld erzeugt wird.

6. Verfahren nach einem der vorhergehenden Ansprüche, **dadurch gekennzeichnet, dass** die Einstrahlung von niederfrequenten gepulsten elektromagnetischen Feldern auf die zu konservierenden vitalen biologischen Materialien maximal viermal pro 24h und nicht länger als 20min pro Einzelanwendung erfolgt.

7. Verfahren nach einem der vorhergehenden Ansprüche, **dadurch gekennzeichnet, dass** die niederfrequenten gepulsten elektromagnetischen Felder Impulsfolgen aus Einzelimpulsen umfassen, deren Amplitude einer Exponential-Funktion entspricht.

8. Verfahren nach einem der vorhergehenden Ansprüche, **dadurch gekennzeichnet, dass** die biologischen Materialien natürliche und/oder gentechnisch veränderte pflanzliche, tierische und/oder mikrobielle Organellen, Zellen und/oder Organismen umfassen.

9. Verfahren nach einem der vorhergehenden Ansprüche, **dadurch gekennzeichnet, dass** während des Konservierungszeitraums zusätzlich zur Temperierung und zur Einstrahlung energetisch schwacher, niederfrequenter, gepulster elektromagnetischer Felder weitere biologisch wirksame physikalische und/oder chemische Einflüsse auf die vitalen biologischen Materialien ausgeübt werden, insbesondere die Einstrahlung von Licht und/oder die Veränderung der chemischen Milieubedingungen, etwa eine Begasung mit Kohlendioxid oder Sauerstoff oder eine Regulation des pH-Werts und/oder der Redox-Verhältnisse, die Versorgung mit Nährstoffen oder die Hemmung der Gerinnung.

10. Vorrichtung zur Durchführung des Verfahrens nach einem der vorhergehenden Ansprüche,
**dadurch gekennzeichnet,**
**dass** eine Temperiereinrichtung (1) vorhanden ist, mittels derer die zu konservierenden vitalen biologischen Materialien über den Konservierungszeitraum in einem vorgegebenen Temperaturbereich gehalten werden können,
**dass** eine Aufzeichnungseinheit (2) für den Temperaturverlauf innerhalb der Vorrichtung über den gesamten Konservierungszeitraum vorhanden ist,
und **dass** eine Einrichtung (3) zur periodischen Einstrahlung von energetisch schwachen, niederfrequenten, gepulsten elektromagnetischen Feldern auf die vitalen biologischen Materialien vorhanden ist, die einen Generator zur Erzeugung von niederfrequenten gepulsten elektromagnetischen Feldern umfasst, deren magnetische Flussdichte ≤ 0,5mTesla, deren Frequenz ≤ 0,5kHz und bei denen die Anzahl von ansteigenden und absteigenden Signalabschnitten innerhalb eines eingestrahlten Pulses ≥ 2 ist.

11. Vorrichtung nach Anspruch 10 zur Durchführung des Verfahrens nach Anspruch 9, **dadurch gekennzeichnet, dass** eine Lichtquelle zur Einstrahlung von Licht in die zu konservierenden vitalen biologischen Materialien und/oder eine Einrichtung zur Veränderung der chemischen Milieubedingungen, insbesondere eine Einrichtung zur Begasung mit Kohlendioxid oder Sauerstoff und/oder eine Einrichtung zur Regulation des pH-Werts und/oder der Redox-Verhältnisse und/oder eine Einrichtung zur Versorgung mit Nährstoffen und/oder eine Einrichtung zur Hemmung der Gerinnung und/oder eine Einrichtung zur mechanischen Bewegung der zu konservierenden vitalen biologischen Materialien vorhanden ist.

12. Vorrichtung nach Anspruch 10 oder 11, **dadurch gekennzeichnet, dass** eine Einrichtung zur Sterilisierung bzw. Reduzierung der Keimbelastung vorgesehen ist.

13. Vorrichtung nach einem der Ansprüche 10 bis 12, **dadurch gekennzeichnet, dass** die Vorrichtung als ein Transport-Behälter ausgestaltet ist.

14. Vorrichtung nach einem der Ansprüche 10 bis 13, **dadurch gekennzeichnet, dass** die Vorrichtung als Inkubator ausgestaltet ist mit dessen Hilfe kontrollierte Außenbedingungen für diverse Brut- und/oder Wachstumsbedingungen für Gewebe oder Organe, die zur Entwicklung ein keimarmes, spezifisches Mikroklima mit eng geregelter Temperatur und Luftfeuchtigkeit benötigen, geschaffen und über einen bestimmten Zeitraum gleichförmig beibehalten werden können.
